# EUROPÄISCHE PATENTANMELDUNG

(11) **EP 3 385 693 A1**
(43) Veröffentlichungstag der Anmeldung: **10.10.2018**
(21) Anmeldenummer: 17165305.8
(22) Anmeldetag: 06.04.2017
(51) Int. Cl.: G01M 3/04

(54) **WIEDERVERWENDBARER MUFFEN- LECKSENSOR**

(71) Anmelder: Wolf, Roland, 70437 Stuttgart (DE)
(72) Erfinder: WOLF, Roland, 70437 Stuttgart (DE)
(74) Vertreter: Jeck, Anton

(57) **Zusammenfassung**

Die Erfindung betrifft ein Muffen-Lecksensor-System, das aus mindestens einem Wasser- bzw. Schlammgemisch durchlässigen Gehäuse mit aufclipsbarem luftdurchlässigem Deckel zur Aufnahme und zum Austausch eines Quellkörper-Schiebers und Aufnahme eines LWL vom Typ IEC B1.1, B1.3, B6-a1, B6-a2 oder B6-b2 besteht. Der auf Wasser reagierende Quellkörper-Schieber verbiegt den LWL-Abschnitt mit einem Durchmesser von 20 mm. Die durch die Verbiegung dieses Abschnitts auftretende Dämpfungserhöhung ist mittels eines am Kabelanfang oder -ende angeordneten Messgeräts messbar.

## Beschreibung

Die Erfindung betrifft eine Weiterentwicklung der Messvorrichtung EP 1 110 070 B1, nämlich einen wiederverwendbaren Muffen-Lecksensor zur Erkennung von Wassereintritt in Verbindungsmuffen von Lichtwellenleitern, wobei dieser Sensor mit einem wasserquellenden Körper auf einem Schieber angeordnet ist. Bei Wasseraufnahme schiebt der Quellkörper den Schieber mit dem Abschnitt des Lichtwellenleiters (LWL) so weit in das Gehäuse, dass der LWL bei einer Biegung von max. 20 mm an dem angeschlossenen optischen Messgerät in einer Entfernung von bis über 70 km den Wassereintritt ortsgenau in der Verbindungsmuffe erkannt werden kann. Nach Wassereintrittsortung kann noch nach über 30 Tagen der Fehler ab der Verbindungsmuffen beseitigt, die Muffe und das Gehäuse getrocknet und ohne Unterbrechung der LWL der wasserquellende Schieber ausgetauscht werden.

Bekannt ist ein Wassersensor aus der Beschreibung EP 1 110 070 B1 mit dem Titel "Lichtwellenleiter-Wassersensor". Die mit weit über 100.000 Stück in der Praxis bewährte Vorrichtung arbeitet mit einer Viskoseschwammplatte und einem PE-Spannband, das eine optisch zulässige Eigenschaftsänderung abstützt. Der Wassersensor ist nur als Einweg-Sensor herstellbar.

Nachteil der bekannten Messvorrichtung besteht darin, dass sie nicht wieder verwendbar ist und dass der Wassereintritt mit mindestens vier Sensor-Typenreihen trotz der Sicherung durch diese vielen Sensoren nur ein Teil der neuen LWL-Generation E DIN EN 60793-2-50 erkannt wird.

Ein weiterer Nachteil ist, dass LWL-Kabelhersteller/-lieferanten keine einheitliche Fasertypen-/ Makrobiegeverlust-Zuordnung angeben und dass durch das LWL-Einfärbeverfahren oder der Farbauftrag keine zuverlässige Erkennung in einem tolerierten Minimal- bzw. Maximaldämpfungsbereich des Wassereintritts gewährleistet werden kann.

Bekannt ist ein weiterer Feuchtesensor für LWL-Systeme zur Erkennung von relativer Luftfeuchte in Muffen, so dass schon geringe Undichtigkeiten erkannt werden können, bevor sich die Muffe mit Wasser füllt und selbst bei Benetzung mit Wasser nach Austrocknung wieder betriebsbereit ist.

Nachteilig bei diesem Feuchtesensor ist, dass es bei dem LWL bei einer max. Durchbiegung mit einem Durchmesser von 5 mm bei den nach E-DN EN 60793-2-50 Abs. 5.5 geforderten Prüfungen und Umweltanforderungen höchstwahrscheinlich zu einem Faserbruch kommen würde.

Ein weiterer Nachteil ist, dass unter Betriebsbedingung DIN EN 50411-2-3, Tabelle 7 (bei verschlammtem Wasser) eine Wiederverwendbarkeit bis zur Leckstellenbeseitigung nicht mehr gewährleistet.

Ein wesentlicher weiterer Nachteil ist, dass der Feuchtesensor nicht auf eine einfache Weise werk- oder bauseitig durch Justierung das sog. Hygrobändchen auf die neuen Fasergenerationen E-DIN EN 60793-2-50 angepasst werden kann.

Aufgabe der vorliegenden Erfindung ist, einen für verschiedene LWL universell einsetzbaren, wiederverwendbaren Muffen-Lecksensor bereit zu stellen, welcher auch bei Verschmutzung zuverlässig eine Leckage im Bereich des LWL anzeigt.

Diese Aufgabe wird durch einen Muffen-Lecksensor gemäß Anspruch 1 gelöst. Bei einem Muffen-Lecksensor ist der Quellkörper auf einem auswechselbaren Schieber angeordnet.

Anders als beim Stand der Technik detektiert der wiederverwendbare Muffen-Lecksensor die Anforderungen nach DIN EN 50411-2-3 (LWL-Spleißkassetten und -muffen für die Anwendung in LWL-Kommunikationssystemen: Tabelle 7: Anforderungen an das umweltbezogene Dichtungsverhalten im Temperaturbereich von -30° C bis +60° C (EN 61300-2-22)) und Eintauchen in Wasser- und Schlammgemische HCl bei pH 2, NaOH bei pH 12 (EN 61300-2-34).
Von besonderem Vorteil ist auch, dass mit maximal zwei bauseitig austauschbaren Quellkörper-Schiebern bei der neuen Fasergeneration ITU-T
G.652.A/B, G.652.C/D
G.657.A1, G.657.A2 und G.657.B2
eine Muffen-Leckstelle zuverlässig und ortsgenau detektiert werden kann.

Ein Aspekt der Erfindung besteht darin, in einer Weiterentwicklung des LWL-Wassersensors der EP 1 110 070 B1 einen Muffen-Lecksensor mit maximal zwei austauschbaren Quellkörper-Schiebern zur Detektierung von Muffen-Leckstellen zu schaffen, der gemäß dem Oberbegriff des Anspruchs 1 auch für LWL der neuen Generationen der E-DIN EN 60793-2-50 einsetzbar ist.

Die Erfindung wird nun anhand von Ausführungsbeispielen näher erläutert. Es zeigen:
- Fig. 1: eine schematische Darstellung eines mit austauschbarem Quellkörper-Schieber ausgestatteten, geöffneten Muffen-Lecksensors;
- Fig. 2: eine schematische Darstellung eines aktivierten Quellkörper-Schiebers der Fig. 1;
- Fig.3: eine schematische Darstellung eines Deckels des Muffen-Lecksensors
- Fig. 4a: einen auswechselbaren Quellkörper-Schieber gemäß Fig. 1 und Fig. 2;
- Fig. 4b: einen Quellkörper-Schieber;
- Fig. 5: eine schematische Darstellung eines Deckels.

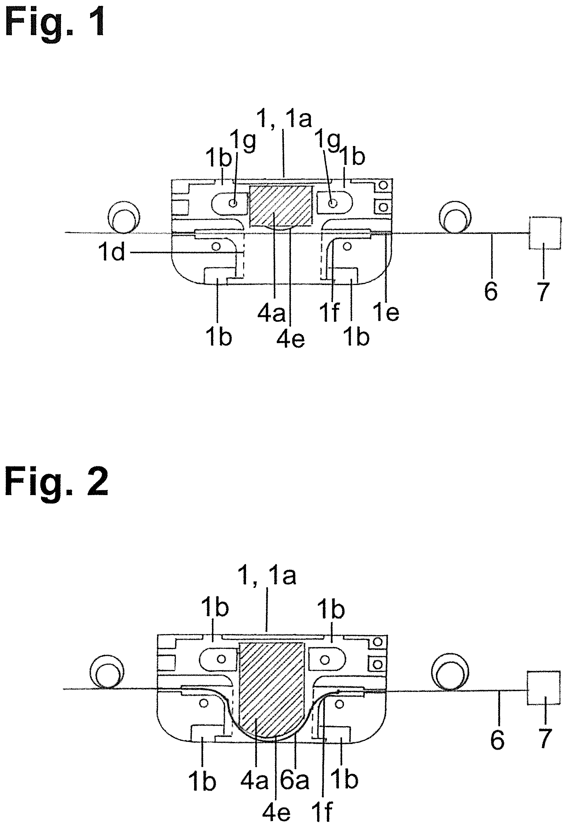

Die Fig. 1 zeigt das Prinzip des Muffen-Lecksensors 1, bestehend aus einem wasserdurchlässigen Gehäuseunterteil 1 a, 1 b zum Ankleben in einer LWL-Spleißkassette oder am Boden einer Muffe und einem wasserquellenden Schieber 4a mit einer Schieberführung 1 d im Gehäuseunterteil 1 a. In einem LWL-Führungskanal 1 e mit ausgebildeten LWL-Umlenkbögen 1f ist ein LWL 6 insbesondere gemäß der neuen Generation E-DIN EN 60793-2-50 eingelegt, der am Ende mit einem Remote Fiber Test System (RFTS) OTDR 7 verbunden werden kann.

Die Fig. 2 zeigt einen Muffen-Lecksensor der Fig. 1 mit einem durch Wasser-Schlammgemisch-Aufnahme, insbesondere von pH 2 bis pH 12, bis zum Gehäuseende 1 a aktivierten Quellkörper-Schieber 4a mit einem LWL 6, der über LWL-Umlenkbögen 1f, 4e mit einem kleinsten Biegedurchmesser von 20 mm geschoben sein kann.

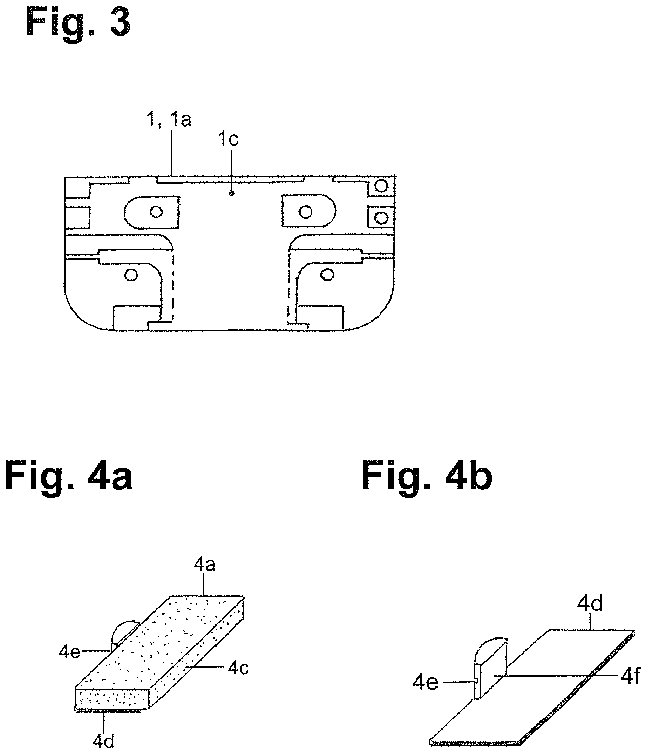

Die Fig. 3 zeigt einen Muffen-Lecksensor der Fig. 1 und Fig. 2 mit einem Quellkörper-Haltestift 1 c zum Halten des Quellkörper-Schiebers der Figur 4a während und nach der Montage des Muffen-Lecksensors 1 und des LWL 6. Der Haltestift 1 c garantiert, dass durch den Quellkörper-Schieber der Fig. 4a ohne Wasser-Schlammgemische der LWL 6 nicht gebogen wird und das (RFTS-) OTDR-System 7 keine Fehlalarmmeldungen signalisieren kann.

Die Fig. 4a zeigt einen in der Fig. 1 und Fig. 2 auswechselbaren Quellkörper-Schieber 4a, bestehend aus einem Schieber 4d mit einem LWL-Führungskanal 4e, bestückt mit einem Quellkörper 4c.

Die Fig. 4b zeigt einen Quellkörper-Schieber der Fig. 4a ohne Quellkörper 4c mit einem zum LWL 6 angeordneten Führungskanal 4e mit einer Quellkörper-Anklebefläche 4f.

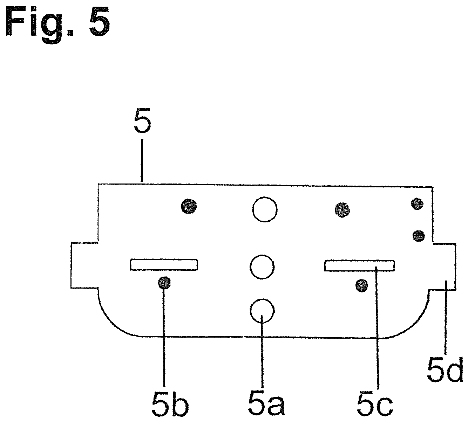

Die Fig. 5 zeigt eine schematische Darstellung eines Deckels 5 des Muffen-Lecksensors mit kreisrunden Zwangsentlüftungen 5a, abgerundeten Aufclipsdornen 5b und LWL-Führungsschienen 5c, der mit Deckelgriffen 5d ausgerüstet sein kann.

**Bezugszeichenliste**

| | Nr. | Nummernliste |
|---|---|---|
| Fig. 1 | 1 | Muffen-Lecksensor |
| | 1a | Gehäuseunterteil zum Ankleben |
| | 1b | durchgängige Öffnungen für Wasser-Schlamm-Gemische |
| | 1d | Quellkörper-Schieberführung |
| | 1e | Lichtwellenleiter-Führungskanal |
| | 1f | Lichtwellenleiter-Umlenkbogen |
| | 1g | Deckelöffnungen für Aufclipsdorne |
| | 4a | Quellkörper-Schieber |
| | 4e | Lichtwellenleiter-Führungskanal |
| | 6 | Lichtwellenleiter Typ OS1 oder OS2 |
| | 7 | RFTS-/OTDR-Messsystem |
| | | |
| Fig. 2 | 1 | Muffen-Lecksensor |
| | 1a | Gehäuseunterteil zum Ankleben |
| | 1b | durchgängige Öffnungen für Wasser-Schlamm-Gemische |
| | 1f | Lichtwellenleiter-Umlenkbogen |
| | 4a | Quellkörper-Schieber durch Wasseraufnahme aktiviert |
| | 4e | Lichtwellenleiter-Führungskanal |
| | 6 | Lichtwellenleiter Typ OS1 oder OS2 |
| | 6a | Lichtwellenleiter ≥ Ø 20 mm, umgebogen |
| | 7 | RFTS-/OTDR-Messsystem |
| | | |
| Fig. 3 | 1 | Muffen-Lecksensor |
| | 1a | Gehäuseunterteil zum Ankleben |
| | 1c | Quellkörper-Schieber-Haltestift |
| Fig. 4a | 4a | Quellkörper-Schieber auswechselbar |
| | 4c | Quellkörper |
| | 4d | Schieber |
| | 4e | Lichtwellenleiter-Führungskanal |
| | | |
| Fig. 4b | 4d | Schieber |
| | 4e | Lichtwellenleiter-Führungskanal |
| | 4f | zum Ankleben des Quellkörpers |
| | | |
| Fig. 5 | 5 | Gehäuseoberteil (= Deckel) des Muffen-Lecksensors |
| | 5a | kreisrunde Zwangsentlüftung |
| | 5b | abgerundeter Aufclipsdorn |
| | 5c | Lichtwellenleiter-Führungsschiene |
| | 5d | Deckelgriff |

| DIN EN | IEC | ITU-T |
|---|---|---|
| 60793-3-50 | 86A/1343 / CD:2010 | |
| | | |
| | B1.1 | G.652.A/B |
| | B1.3 | G.652.C/D |
| | B-6a1 | G.657.A1 |
| | B6-a2 | G.657.A2 |
| | B6-b2 | B2 |
| 50411-2-2 | ICS 33.180.20 | |
| 50411-2-3 | ICS 33.180.20 | |
| | | |
| 61300-2-22 | 61300-2-22 | |
| 61300-2-34 | 61300-2-34 | |

## Patentansprüche

1. Muffen-Lecksensor mit einem wasserempfindlichen Quellkörper, mittels welchem bei Wasseraufnahme ein Lichtwellenleiter (LWL) insbesondere der neuen Fasergeneration DIN EN 60793-2-50 vom Typ OS1 oder OS2 der Kategorien B1.1, B1.3 oder B6-a1, B6-a2 derart bis zu einem Durchmesser von 20 mm umgebogen wird, dass, vorzugsweise mit einem Remote Fiber/Monitoring Testsystem (RFTS), insbesondere im Übertragungsbereich bei 1625 nm, die Leckstelle ortsgenau messbar ist,
**dadurch gekennzeichnet,**
**dass** der Muffen-Lecksensor ein zweigeteiltes wasser- bzw. schlammgemischaufnehmendes, luftdurchlässiges Gehäuse mit einem Gehäuseunterteil (1a) und einem Gehäuseoberteil (5) ist, das mit einem bauseitig austauschbaren Quellkörper-Schieber (4a) versehen ist, welcher ausgebildet ist, nach der Aufnahme eines Wasser-Schlamm-Gemischs über Öffnungen im Gehäuse (1b), insbesondere einen LWL (6) über LWL-Führungskanäle (1e, 4e) und -schienen (5c) bis zu einem maximalen Dorndurchmesser von 20 mm zu drücken und dadurch einen Makrokrümmungsverlust insbesondere bei 1625 nm > 0,2 dB zu erzeugen, der mit einem RFTS-System (7) ortsgenau lokalisierbar ist.

2. Muffen-Lecksensor nach Anspruch 1,
**dadurch gekennzeichnet,**
**dass** der Quellkörper-Schieber (4a) insbesondere an die Fasergeneration vom Typ B1.1, B1.3, B6-a1, B6-a2 oder B6-b2 und/oder nach der Aufnahme des Wasser-Schlamm-Gemischs austauschbar angepasst ist.

3. Muffen-Lecksensor nach den Ansprüchen 1 und 2,
**dadurch gekennzeichnet,**
**dass** der Quellkörper-Schieber (4a) aus zwei Bauteilen, einem Schieber (4d) mit einem LWL-Führungskanal (4e) und einem Wasser- bzw. Schlammgemisch-Quellkörper (4c), hergestellt ist.

4. Muffen-Lecksensor nach den Ansprüchen 1, 2 und 3,
**dadurch gekennzeichnet,**
**dass** der Quellkörper (4c), der aus einem mindestens zweilagigen Viskosepressschwamm oder aus mindestens zwei Lagen Quellvliesband ausgebildet ist, den LWL (6) nach der Aufnahme des Wasser- bzw. Schlammgemischs bis zur messbaren Dämpfungsänderung (6a) biegen kann.

5. Muffen-Lecksensor nach Anspruch 1,
**dadurch gekennzeichnet,**
**dass** im Gehäuseunterteil (1a) durchgängige Öffnungen (1b) für das Wasser- bzw. Schlammgemisch, ein Quellkörper-Schieber-Haltestift (1c), eine Quellkörper-Schieber-Führung (1d), ein LWL-Führungskanal (1e) mit LWL-Umlenkbögen (1f) und Deckelöffnungen (1g) für Aufclipsdorne angeordnet sind.

6. Muffen-Lecksensor nach Anspruch 1,
**dadurch gekennzeichnet,**
**dass** das Gehäuseoberteil (5) mit abgerundeten Aufclipsdornen (5b) mit LWL-Führungsschienen (5c), Zwangsentlüftungslöchern (5a) und Deckelgriffen (5d) ausgebildet ist.
